# EUROPÄISCHE PATENTSCHRIFT

(11) **EP 3 802 044 B1**
(45) Veröffentlichungstag und Bekanntmachung des Hinweises auf die Patenterteilung: **22.06.2022**
(21) Anmeldenummer: 19722890.1
(22) Anmeldetag: 08.05.2019
(51) Int. Cl.: B29C 35/06, B29C 35/04, B29C 35/02, B29C 48/91

(54) **EINRICHTUNG ZUM VULKANISIEREN VON KONTINUIERLICHEN PROFILEN**
DEVICE FOR VULCANIZING CONTINUOUS PROFILED ELEMENTS
ÉQUIPEMENT DESTINÉ À VULCANISER DES PROFILÉS CONTINUS

(30) Priorität: 30.05.2018 DE 102018112986
(43) Veröffentlichungstag der Anmeldung: 14.04.2021
(73) Patentinhaber: Gerlach Maschinenbau GmbH, 41334 Nettetal (DE)
(72) Erfinder: WAWROSCH, Jakub, 41751 Viersen-Dülken (DE); MÖCKEL, Jens, 41334 Nettetal (DE)
(74) Vertreter: Lenzing Gerber Stute
(86) Internationale Anmeldenummer: PCT/EP2019/061806
(87) Internationale Veröffentlichungsnummer: WO 2019/228768

(56) Entgegenhaltungen:
- EP-A1- 0 508 254
- EP-A1- 2 732 948
- EP-A2- 1 992 474
- DE-A1- 2 708 782
- DE-A1- 3 543 690
- US-A- 5 166 484

## Beschreibung

Die vorliegende Erfindung betrifft eine Einrichtung zum Vulkanisieren von durch die Einrichtung hindurch geführten Profilen, insbesondere von kontinuierlichen Profilen wie beispielsweise Strangprofilen aus Kautschuk oder einer Folge von Profilstücken, mit mindestens einer durch mindestens eine Wandung gebildeten Kavität, wobei die mindestens eine Wandung mindestens einen Profileinlass und mindestens einen Profilauslass sowie mindestens einen Heißgaseinlass und mindestens einen Heißgasauslass aufweist, so dass die Kavität mit Heißgas durchströmt werden kann, wobei die Heißgasströmung von der mindestens einen Wandung und/oder von mindestens einem Strömungsführungselement innerhalb der Kavität entlang mindestens eines Abschnitts mindestens eines Profils geführt wird.

Kontinuierliche Profile aus Gummi werden beispielsweise zum Dichten von Türen, Fenstern oder Maschinenteilen eingesetzt. Ebenso sind beispielsweise Schläuche und Kabelummantelungen typische Produkte aus einem kontinuierlichen Profil, aber auch Bahnschweller können aus kontinuierlichen Kunststoff- bzw. Gummiprofilen hergestellt werden. Diese kontinuierlichen Profile können unterschiedliche und insbesondere komplexe Profilquerschnitte aufweisen. Die Produktion solcher Profile umfasst typischerweise die Extrusion eines Naturkautschuk- oder Synthetikkautschukgemisches und eine nachfolgende Vulkanisation des Gemisches durch Zufuhr von Energie, meist Wärme- oder Strahlungsenergie. Bei der Vulkanisation werden die Moleküle des Kautschuks durch Vulkanisationsmittel, die sich im Gemisch befinden, miteinander vernetzt, so dass der Kautschuk zu Gummi umgewandelt wird, wobei sich die Konsistenz des Gummis, insbesondere seine Elastizität, in einem großen Bereich einstellen lässt. Während der Vulkanisation entstehen gesundheitsgefährdende Verbindungen, die aus dem Kautschuk an die Umgebung entweichen, zum Beispiel Schwefelverbindungen.

Es sind Vulkanisationsverfahren bekannt, bei denen das kontinuierliche Profil zur Vulkanisation durch eine kanalförmige Einrichtung geführt und dabei entlang der Einrichtung durch verschiedene Methoden erhitzt wird, etwa durch Infrarotstrahlung, Mikrowellenstrahlung und/oder insbesondere Heißluft. Der Kanal, den das Profil durchläuft, wird als Kavität bezeichnet.

In der DE 27 08 782 A1 wird bereits als vorbekannt angesehen, dass ein zu behandelndes Profil senkrecht oder horizontal durch einen Heizkanal geführt werden kann. Außerdem offenbart die DE 27 08 782 A1 eine Vorrichtung zum kontinuierlichen Vulkanisieren von Kautschuk- oder Silikonkautschukprofilen in einem Heizkanal. Der Heizkanal ist in einem wärmeisolierten Kasten angeordnet und enthält einen Infrarotheizstrahler und eine Schiene als Reflexionseinheit bzw. als Heißluftführung. Das zu vulkanisierende Gut wird auf einem Endlostransportband horizontal durch den Heizkanal geführt.

Aus der DE 35 43 690 A1 ist ein Verfahren zum Vulkanisieren von Strangprofilen in einer Warmluftatmosphäre bekannt, bei dem zur Verringerung des durch Weichmacher schadstoffbelasteten Warmluftvolumens in der Prozesskammer ein starres Einsatzrohr auf einen Profilstrang aufgesetzt wird, so dass das schadstoffbelastete Warmluftvolumen innerhalb des Einsatzrohres von dem restlichen Warmluftvolumen abgetrennt ist und lediglich ein kleiner Teil des gesamten Warmluftvolumens ausmacht. Damit soll der Aufwand für die Nachbehandlung der Abluft beschränkt werden.

Die Aufgabe der vorliegenden Erfindung ist es, eine optimierte Einrichtung zum Vulkanisieren von kontinuierlichen Profilen mit Heißgas bereitzustellen.

Die Aufgabe wird gelöst durch eine Einrichtung gemäß Anspruch 1. Weitere vorteilhafte Ausführungsformen ergeben sich aus den Unteransprüchen.

Im Folgenden werden unter dem Begriff Profil sowohl Bauteile, deren Querschnitt sich über ihre Länge nicht ändert, also auch Bauteile, deren Querschnitt sich über die Länge ändert, verstanden, wobei die Änderungen bevorzugt nicht im Bereich von Größenordnungen liegen. Solche Profile können endlos oder in Form von einzelnen Bauteilen mit einer endlichen Länge nacheinander in die Kavität eingefahren werden, wobei letztere als Profilstücke bezeichnet werden. Als Profile in Form von Profilstücken werden im Folgenden auch solche Bauteile verstanden, deren Länge im Bereich der Größenordnung ihrer Querschnittsdimensionen liegt, also insbesondere kleinteilige Bauteile wie etwa Bremsklötze oder Maschinenfüße.

Erfindungsgemäß weist die Einrichtung Stellmittel zum Einstellen des Abstands der mindestens einen Wandung und/oder des mindestens einen Strömungsführungselement zu dem mindestens einen Profil auf. Dadurch kann der Strömungsquerschnitt innerhalb der Kavität an das jeweils zu verarbeitende Profil angepasst und optimiert werden. Hierdurch wird erreicht, dass die Heißgasströmung für das Querschnittsprofil des jeweils zu vulkanisierenden Strangprofils optimiert werden kann, so dass es unter anderem möglich ist, die für das Vulkanisieren benötigte Heißgasmenge zu reduzieren. Dies führt zum einen zu einer Energieersparnis, und zum anderen kann der Aufwand zum Reinigen des Heißgases von gesundheitsgefährdenden Gasen oder Ähnlichem verringert werden, da eine geringere Heißgasmenge zu reinigen ist. Als Heißgas wird bevorzugt Heißluft eingesetzt.

Mit der Erfindung wird eine Beschickung der Kavität mit unterschiedlich großen Profilen bzw. mit Profilen unterschiedlicher Querschnitte mit jeweils optimierter Heißgasströmung möglich, wobei bei jedem Wechsel des Profils auch der Strömungsquerschnitt für das Heißgas auf einfache Weise angepasst werden kann. Eine einzige Einrichtung kann dann für die Produktion von vielen verschiedenen Profilen mit unterschiedlichen Querschnitten genutzt werden, wobei für jede Profilgeometrie ein günstiger Wärmeübergang eingestellt werden kann.

In einer einfachen Ausführungsform können als Stellmittel manuell betätigbare Mittel, insbesondere Gewindestangen, Schieber, Hebel oder Drücker vorgesehen sein. Im Gegensatz zu elektrisch bzw. automatisch betätigbaren Stellmitteln lässt sich mit manuell betätigbaren Stellmitteln die Einrichtung in aller Regel günstiger herstellen.

Alternativ kann mindestens ein Stellmittel durch einen Motor angetrieben oder durch einen Motor gebildet sein. Wenn die zu verarbeitende Profilgeometrie oft wechselt, überwiegt der Vorteil der durch den Motor vereinfachten Bedienung über den gegenüber manuellen Stellmitteln höheren Herstellungskosten. Insbesondere kann eine Einrichtung mit motorischen Stellmitteln um eine Controller- und/oder eine Speichereinheit erweitert werden, so dass Einstellungen verschiedener Strömungsquerschnitte für wiederholt genutzte Profilquerschnitte gespeichert, bei Bedarf abgerufen und so automatisch optimal angepasst werden können.

Vorzugsweise sind Führungsmittel zum Führen einer Bewegung der mindestens einen Wandung oder des mindestens einen Strömungsführungselements vorgesehen, insbesondere Schienen, Scharniere, Hubstangen oder Gelenke. Ist als Strömungsführungselemente beispielsweise ein Strömungsleitblech vorgesehen, das parallel zu einer der Wandungen innerhalb der Kavität angeordnet ist, kann es an mehreren Hubstangen aufgehängt sein, die vorteilafterweise gekoppelt bewegbar sind, um ein Verkanten des Strömungsleitblechs zu vermeiden. Andere Führungsmittel für Strömungsführungselemente sind beispielsweise ein Scharnier oder Gelenk für eine Blende, die innerhalb der Kavität verschwenkt werden kann, um die Heißgasströmung zu beeinflussen oder den Strömungsquerschnitt zu verändern.

In einer bevorzugten Ausführungsform kann die mindestens eine Wandung und/oder das mindestens eine Strömungsführungselement relativ zu dem mindestens einen Profil bewegt werden. So kann beispielsweise eine feststehende Außenhülle für die Kavität vorgesehen sein, wobei innerhalb dieser Hülle Strömungsleitbleche vorgesehen sind, die in Richtung zum Profil verstellt werden können und einen Strömungsquerschnitt für die Heißgasströmung innerhalb der von den Wandungen gebildeten Außenhülle der Kavität bilden, die kleiner ist als die durch die Außenhülle gebildete Querschnittsfläche.

Es ist aber ebenso im Sinne der Erfindung, wenn alternativ oder in Ergänzung das mindestens eine Profil relativ zu der mindestens einen Wandung und/oder dem mindestens einen Strömungsführungselement bewegt werden kann. So kann bei einer Kavität mit rechteckigem Querschnitt der Strömungsquerschnitt verändert werden, wenn die Einrichtung ein Transportband für das zu vulkanisierende Strangprofil aufweist und das Transportband höhenverstellbar ist. Der Strömungsquerschnitt wird an seiner unteren Seite durch das Transportband bestimmt, insbesondere dann, wenn die Breite des Transportbands im Wesentlichen der lichten Breite der Kavität entspricht. Auch ist es in einer anderen Ausführungsform möglich, dass kontinuierliche Profil ohne Transportband durch Aufbringen eines Zugs schwebend durch die Kavität zu führen. Ein schwebender Transport kann beispielsweise auch mit Hilfe eines Luftkissens erfolgen. Auch hier können die Transportelemente so ausgebildet sein, dass das durch die Kavität geführte Band in seiner Position innerhalb der Kavität verstellbar ist. So kann das kontinuierliche Profil selbst zum Leiten der Luftströmung innerhalb der Kavität verwendet werden, insbesondere dann, wenn das Profil beispielsweise an mindestens einer seiner Seiten nicht wesentlich schmaler als die Kavität ist.

Als Strömungsführungselemente kommen insbesondere Strömungsleitbleche, von der Seite in die Kavität einschiebbare Blenden oder in der Kavität einliegende Kästen infrage. Es sind grundsätzlich auch alle weiteren Arten von Einbauten zur Strömungsführung denkbar. Die Strömungsführungselemente können sehr einfach bedienbar sein. In einer Ausführungsform können Stellmittel vorgesehen sein, mit denen die Position der Strömungsführungselemente innerhalb der Kavität in Richtung zum Profil hin oder davon weg eingestellt werden kann. Es kann auch sinnvoll sein, Stellmittel vorzusehen, mit denen die Position bestimmter Stellmittel in anderen Richtungen bewegt werden kann. Z.B. kann ein Kasten in der Kavität vorgesehen sein, der sich mit Stellmitteln entlang von Schienen in Längsrichtung der Kavität verstellen lässt. Letzteres könnte beispielsweise von Interesse sein, um einen Kasten, der einen Strömungsquerschnitt für ein bestimmtes Profil bereitstellt, aus einer Zone in der Kavität zwischen dem Heißgaseinlass und dem Heißgasauslass in eine Zone außerhalb dieses Bereichs oder aus der Zone außerhalb dieses Bereichs wieder in den Bereich hinein zu verschieben.

In einer weiteren bevorzugten Ausführungsform der Erfindung sind zwei oder mehr Wandungen und/oder Strömungsführungselemente vorgesehen, die relativ zu dem mindestens einen Profil bewegt werden können. So können etwa bei einer rechteckigen Kavität bewegliche seitliche und obere Wandungen vorgesehen sein, so dass die Kavität gleichmäßig und stets symmetrisch hin zum Profil verkleinert werden kann, bzw. das Profil stets in der Mitte der Kavität positioniert bleibt und der Wärmeübergang an allen Seiten des Profils gleich einstellbar ist. In gleicher Weise können seitlich und oberhalb des Profils Strömungsführungselemente angeordnet sein, zum Beispiel Strömungsleitbleche.

Es sind verschiedene Strömungsquerschnitte denkbar, die je nach Geometrie des zu vulkanisierenden Profils verschiedene Vorteile aufweisen können. Neben dem bereits erwähnten rechteckigen Strömungs- bzw. Kavitätsquerschnitt kann dieser auch rund oder anders vieleckig sein; die Wandungen einer Kavität mit rundem oder annähernd rundem Querschnittsind dann beispielsweise als Rohr ausgebildet. Damit die rohrförmige Wandung erfindungsgemäß in ihrem Durchmesser veränderlich ist, kann sie aus überlappenden Elementen gebildet sein, die eine im Wesentlichen teilkreis- oder kreisförmige Ummantelung bilden und zueinander derart verschieblich sind, dass der Querschnitt irisförmig verjüngt bzw. wieder vergrößert werden kann. Auch ist denkbar, die rohrförmige Wandung aus einem elastischen Materialien zu bilden, so dass es mit verstellbaren Rahmenelementen weiter oder weniger weit zu einem Rohr aufgespannt werden kann.

Die Einstellung des Abstands des mindestens einen Profils zu der mindestens einen Wandung und/oder dem mindestens einen Strömungsführungselement kann typischerweise vor dem Einbringen des zu vulkanisierenden Profilstrangs in die Kavität erfolgen. Alternativ oder in Ergänzung hierzu ist der Abstand des mindestens einen Profils zu der mindestens einen Wandung und/oder dem mindestens einen Strömungsführungselement während des Vulkanisierens einstellbar. So kann beispielsweise in einem kontinuierlichen Testbetrieb der Strömungsquerschnitt verändert und dabei fortlaufend die Qualität des Produkts beobachtet werden, um einen optimalen Strömungsquerschnitt bestimmen zu können.

Die Einrichtung zum Vulkanisieren von kontinuierlichen Profilen kann auch einen Sensor zur Erkennung von Profilquerschnitten aufweisen, so dass die Stellmittel automatisiert auf ein durch den Sensor erkanntes Profil eingestellt werden können. Vorteilhaft kann ein Wechsel der Profilgeometrie dann vollständig automatisiert durchgeführt werden. Es ist zudem möglich, den Strömungsquerschnitt dynamisch zu verändern, um die Heißgasströmung kontinuierlich an Profile mit sich über ihre Länge verändernden Querschnitten anzupassen. Dies ist insbesondere dann möglich, wenn eine Steuerung und/oder Regelung zur Veränderung des Abstands des mindestens einen Profils zu der mindestens einen Wandung und/oder dem mindestens einen Strömungsführungselementvorgesehen ist.

In noch einer bevorzugten Ausführungsform ist die Größe des Querschnitts des mindestens einen Profileinlasses und/oder des mindestens einen Profilauslasses veränderlich. So kann der Profileinlass bzw. Profilauslass stets auf den Querschnitt des gerade zu vulkanisierenden Profils eingestellt werden, so dass an diesen Stellen keine bzw. nur wenig Falschluft in die Kavität eingezogen wird, wenn beispielsweise in der Kavität ein Unterdruck gegenüber der Umgebung besteht, oder aber bei einem Überdruck in der Kavität möglichst wenig Heißgas über den Profileinlass bzw. den Profilauslass aus der Kavität entweichen kann.

Besonders bevorzugt sind der mindestens eine Heißgaseinlass und der mindestens eine Heißgasauslass derart angeordnet, dass das Heißgas in Richtung oder entgegen der Transportrichtung des mindestens einen Profils strömt. Besonders ein Gegenstrom hat sich als vorteilhaft für den Wärmeübergang zwischen Heißgas und Profil erwiesen. Alternativ ist es aber auch möglich, dass der mindestens eine Heißgaseinlass und der mindestens eine Heißgasauslass derart angeordnet sind, dass das Heißgas in einer Richtung orthogonal zur Transportrichtung des mindestens einen Profils strömt.

Im Folgenden wird die Erfindung anhand von Figuren, in denen eine bevorzugte Ausführungsform der Erfindung dargestellt ist, näher erläutert.

Es zeigen
- Fig. 1: eine perspektivische Ansicht eines Abschnitts einer Kavität einer erfindungsgemäßen Vulkanisationseinrichtung mit seitlichen Strömungsleitblechen, aber ohne Darstellung einer oberen Wandung oder eines oberen Strömungsleitblechs;
- Fig. 2: einen Querschnitt durch die in Fig. 1 dargestellte Kavität;
- Fig. 3: eine perspektivische Ansicht des in Fig. 1 dargestellten Abschnitts einer Kavität mit seitlichen Strömungsleitblechen und einem oberen Strömungsleitblech, jedoch ohne Darstellung der oberen Wandung, in einer ersten Betriebsposition;
- Fig. 4: einen Querschnitt durch die in Fig. 3 dargestellte Kavität;
- Fig. 5: eine perspektivische Ansicht des in Fig. 1 dargestellten Abschnitts einer Kavität mit seitlichen Strömungsleitblechen und einem oberen Strömungsleitblech, jedoch ohne Darstellung der oberen Wandung, in einer zweiten Betriebsposition; und
- Fig. 6: einen Querschnitt durch die in Fig. 5 dargestellte Kavität.

Die Figuren zeigen jeweils einen Abschnitt einer Kavität 1 als Beispiel für einen erfindungswesentlichen Teil einer Einrichtung zum Vulkanisieren von Profilen 9. Durch den dargestellten Abschnitt der Kavität wird ein Profil 9, hier ein Strangprofil, auf einem Transportband 5 in einer Richtung TR transportiert, wobei das Profil 9 mithilfe von Warm- oder Heißgas erwärmt und dadurch vulkanisiert wird. Zwangsläufig hat die Kavität einen Einlass für das Profil und einen Auslass, die zur Vereinfachung aber nicht dargestellt sind.

Die in den Figuren abgebildete Kavität 1 ist durch äußere, feststehende Wandungen 2, 3, 4 und eine nicht abgebildete obere Wandung, die z.B. als klappbarer Deckel ausgeführt sein kann, definiert. Die Wandungen 2, 3, 4 trennen die Kavität 1 von der Umgebung. Im geschlossenen Zustand kann durch die Wandungen 2, 3, 4 an sich keine Luft dringen. Es ist jedoch nicht gänzlich vermeidbar, dass an nicht gezeigten Einlass- und Auslassöffnungen, sowohl für das Profil 9 als auch für das Heißgas, und an anderen etwaigen Durchgangsöffnungen sogenannte Falschluft von außen in die Kavität 1 gelangen kann. Als Falschluft wird Luft, insbesondere Umgebungsluft, verstanden, die nicht beabsichtigt in die Kavität 1 eingeführt oder eingesaugt wird.

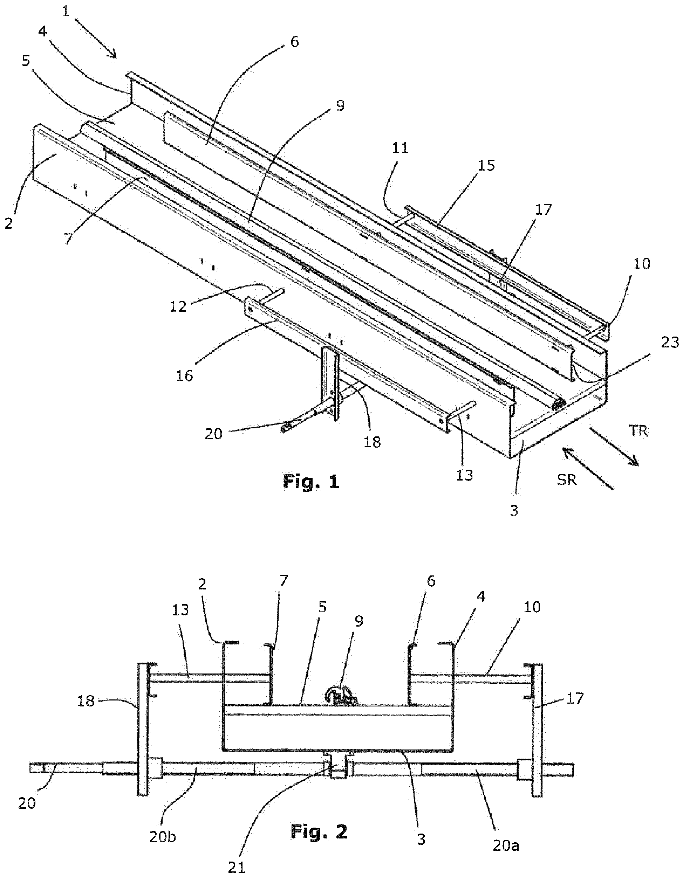

Innerhalb der Kavität 1 sind als Strömungsführungselemente bewegliche seitliche Strömungsleitbleche 6, 7 vorgesehen, die von den Seiten her an das Profil 9 herangebracht werden können. Dazu sind die Strömungsleitbleche 6, 7 rückseitig mit Hubstangen 10, 11, 12, 13 verbunden, die durch die feststehenden Wandungen 2, 4 der Kavität nach außen geführt sind. Die Hubstangen 10, 11, 12, 13 sind außerhalb der Kavität 1 über Verbindungsteile 15, 16, 17, 18 mit einer Gewindestange 20 verbunden. Wie in Fig. 2 gezeigt, weist die Gewindestange 20, die mittels einer Halterung 21 an der Unterseite der Kavität 1 gehalten wird, jeweils einen mit dem Strömungsleitblech 6 korrespondierenden Gewindeabschnitt 20a und einen mit dem Strömungsleitblech 7 korrespondierenden Gewindeabschnitt 20b auf. Die Gewindeabschnitte 20a und 20b weisen jeweils einen dem anderen Gewindeabschnitt 20a, 20b entgegengesetzten Drehsinn auf, so dass eine Drehung der Gewindestange 20 eine entgegengesetzte korrespondierende Bewegung der Strömungsleitbleche 6, 7 bewirkt. Dadurch ist sichergestellt, dass die Leibleche 6, 7 jederzeit gleich weit von dem Mittelpunkt der Kavität 1, bzw. von dem Punkt, durch den das Profil 9 geführt wird, entfernt sind.

In der in Fig. 1 gezeigten Ausführungsform strömt das Heißgas vom nicht gezeigten Heißgaseinlass zum nicht gezeigten Heißgasauslass im Wesentlichen in einer Strömungsrichtung SR, die der Profilrichtung TR entgegengesetzt ist. Die Strömungsleitbleche 6, 7, sowie die Tragevorrichtung 5, sie zum Beispiel ein Laufband sein kann, führen die Strömung in dieser Richtung. Am Ende der Strömungsleitbleche 6, 7 können nicht gezeigte Blenden vorgesehen sein, die die Stirnseiten 23 der Strömungsleitbleche mit der feststehenden Wandung 2, 4 schräg verbinden und verhindern, dass anströmendes Heißgas hinter die Strömungsleitbleche 6, 7 strömt. Diese Blenden sind dann beweglich oder flexibel, so dass die Strömungsleitbleche 6, 7 nicht an ihrer Bewegung auf das Profil 9 zu bzw. vom Profil 9 weg behindert werden.

Durch die Strömungsleitbleche 6, 7 kann der für die Heißgasströmung bereitstehende Strömungsquerschnitt die Heißgasströmung innerhalb der Kavität verkleinert werden, so dass größere Luftgeschwindigkeiten resultieren und das Strömungsregime bereits bei geringeren Heißgasdurchsätzen als turbulente Strömung eingestellt werden kann. Auf diese Weise wird der Wärmeübergang zwischen dem Heißgas und dem Profil 9 verbessert, so dass geringere Heißgasmengen zum Aufheizen des Profils 9 benötigt werden und entsprechend gereinigt werden müssen.

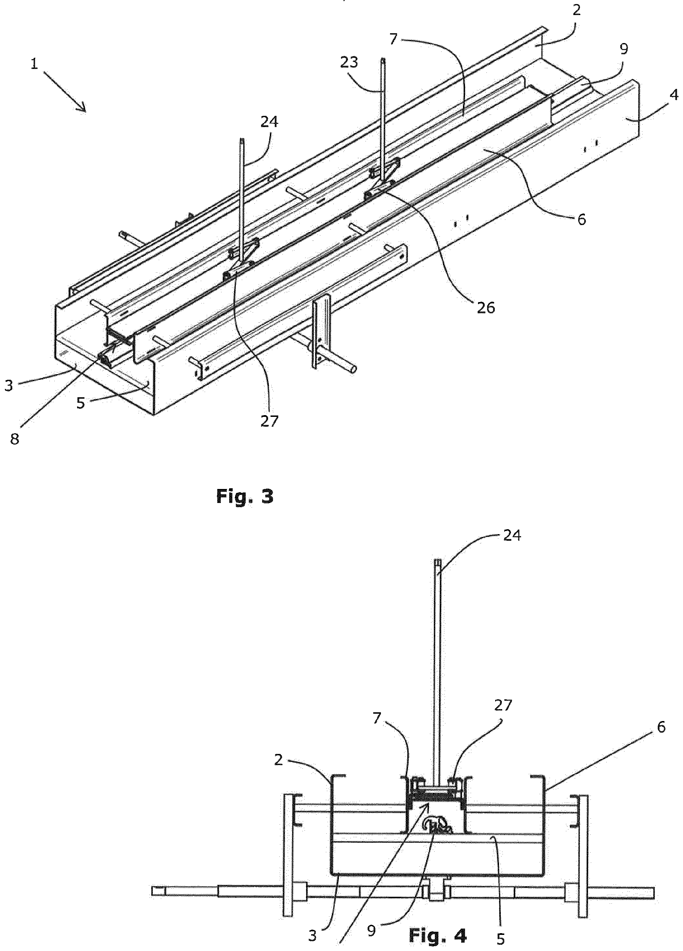

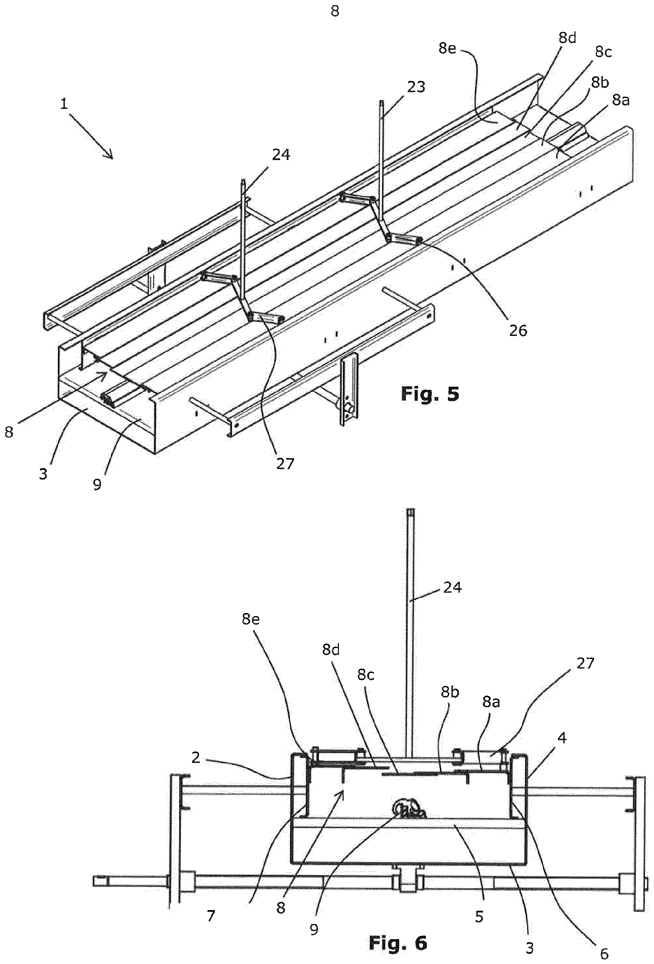

In den Figuren 3, 4, 5 und 6 ist die in Figur 1 dargestellte Kavität 1 mit einem beweglichen oberen Strömungsleitblech 8 gezeigt, das innerhalb der Kavität 1 in vertikaler Richtung verstellt werden kann. Das obere Strömungsleitblech 8 besteht aus mehreren Abschnitten 8a, 8b, 8c, 8d, 8e, die übereinander verschiebbar sind, wie sich aus den Figuren 4 und 6 ergibt. Dadurch kann die Breite des oberen Strömungsleitblechs 8 entsprechend den Positionen der seitlichen Strömungsleitbleche 6, 7 eingestellt werden. Zum Aufspannen oder Zusammenfahren des oberen Strömungsleitblechs 8 sind die zwei Äußeren der Abschnitte 8a, 8b, 8c, 8d, 8e, die die Inneren der Abschnitte 8a, 8b, 8c, 8d, 8e teleskopartig mitziehen, mit Faltgetrieben 26, 27 gekoppelt, welche wiederum mit Gewindestangen 23, 24 verbunden sind. Die Gewindestangen 23, 24 sind durch die nicht abgebildete obere Wandung der Kavität 1 geführt und können von außerhalb der Kavität 1 bedient werden, um die Faltgetriebe 26, 27 zu betätigen und so das obere Strömungsleitblech 8 aufzuspannen. Zudem sind in der oberen Wandung Innengewinde für korrespondierende Außengewinde an den Gewindestangen 23, 24 vorgesehen, so dass eine Drehung der Gewindestangen 23, 24 eine Höhenverstellung des oberen Strömungsleitblechs 8 bewirkt. Es ist alternativ auch möglich, dass das obere Strömungsleitblech 8 mit den an den Abschnitten 8a und 8e angeformten Falzkanten die seitlichen Strömungsleitbleche 6, 7 hintergreift bzw. mit diesen gekoppelt ist, so dass es durch Verfahren der seitlichen Strömungsleitbleche 6, 7 mit aufgespannt werden kann. In den Figuren 3 und 4 stehen die seitlichen Strömungsleitbleche vergleichsweise nah beieinander. Die Abschnitte des oberen Strömungsleitblechs 8 sind dann übereinander geschoben. Dadurch ist der Strömungsquerschnitt um das Profil 9 herum verhältnismäßig klein. In den Figuren 5 und 6 ist das Strömungsleitblech 8 ausgefahren und bildet mit den seitlichen Strömungsleitblechen 6, 7 einen deutlich größeren Strömungsquerschnitt.

Das obere und die seitlichen Strömungsleitbleche 6, 7, 8 erzeugen zusammen mit dem Transportband 5 eine das Profil 9 umgreifende Heißgasführung, wie in den Fig. 4 und 6 im Querschnitt zu erkennen ist. Die Breite dieser Heißgasführung kann durch die Positionen der seitlichen Strömungsleitbleche 6, 7 eingestellt werden, wobei die Breite des oberen Strömungsleitblechs 8 an diese Breite angepasst wird. Die Höhe der Heißgasführung wird durch die vertikale Position des oberen Strömungsleitblechs 8 eingestellt. Die insgesamt mögliche Höhe einer durch die Strömungsleitbleche 6, 7, 8 gebildeten Heißgasführung, bei der diese noch geschlossen ist, ist durch die Höhe der seitlichen Strömungsleitbleche 6, 7 und die Höhe der abgefalzten, vertikal stehenden Bereiche der äußeren Abschnitte 8a, 8e des oberen Strömungsleitblechs 8 bestimmt. In einer alternativen Ausführungsform ist die Höhe der seitlichen Strömungsleitbleche 6, 7 veränderlich, um eine große mögliche Höhe der Heißgasführung zu ermöglichen, zum Beispiel auf die gleiche Weise, wie die Breite des oberen Strömungsleitblechs 8 veränderlich ausgebildet ist.

Die gesamte Einrichtung kann eine oder mehrere der hier vereinfacht dargestellten Kavitätsabschnitte aufweisen oder auch andere Abschnitte aufweisen, wobei die Erwärmung des Profils nicht nur durch Luft erfolgen muss, sondern auch in Ergänzung beispielsweise Mikrowellen zum Aufheizen des Profils eingesetzt werden können. Mikrowellenemitter können entweder in oder an den Wandungen bzw. den Strömungsleitblechen des hier dargestellten Abschnitts einer Kavität oder in einem anderen Abschnitt der Kavität vorgesehen sein. In ähnlicher Weise können in der Einrichtung auch Mittel zum Aufheizen des zu vulkanisierenden Profils mit Infrarotstrahlung eingesetzt werden.

## Patentansprüche

1. Einrichtung (1) zum Vulkanisieren von durch die Einrichtung hindurch geführten Profilen (9), insbesondere von kontinuierlichen Profilen (9) wie beispielsweise Strangprofilen aus Kautschuk oder einer Folge von Profilstücken, mit mindestens einer durch mindestens eine Wandung (2, 3, 4) gebildeten Kavität, wobei die mindestens eine Wandung (2, 3, 4) mindestens einen Profileinlass und mindestens einen Profilauslass sowie mindestens einen Heißgaseinlass und mindestens einen Heißgasauslass aufweist, so dass die Kavität mit Heißgas durchströmt werden kann, wobei die Heißgasströmung von der mindestens einen Wandung (2, 3, 4) und/oder von mindestens einem Strömungsführungselement (6, 7, 8) innerhalb der Kavität entlang mindestens eines Abschnitts mindestens eines Profils (9) geführt wird, **gekennzeichnet durch** Stellmittel (10, 11, 12, 13, 23, 24) zum Einstellen des Abstands der mindestens einen Wandung (2, 3, 4) und/oder des mindestens einen Strömungsführungselements (6, 7, 8) zu dem mindestens einen Profil (9).

2. Einrichtung (1) nach Anspruch 1, **dadurch gekennzeichnet, dass** als Stellmittel (10, 11, 12, 13, 23, 24) zum Einstellen des Abstands der mindestens einen Wandung (2, 3, 4) und/oder des mindestens einen Strömungsführungselements (6, 7, 8) zu dem mindestens einen Profil (9) manuell betätigbare Mittel, insbesondere Gewindestangen, Schieber, Hebel oder Drücker vorgesehen sind.

3. Einrichtung (1) nach Anspruch 1 oder 2, **dadurch gekennzeichnet, dass** mindestens ein Stellmittel (10, 11, 12, 13, 23, 24) durch einen Motor angetrieben oder durch einen Motor gebildet ist.

4. Einrichtung (1) nach einem der vorhergehenden Ansprüche, **gekennzeichnet durch** Führungsmittel zum Führen einer Bewegung der mindestens einen Wandung (2, 3, 4) oder des mindestens einen Strömungsführungselements (6, 7, 8), insbesondere Schienen, Scharniere, Hubstangen oder Gelenke.

5. Einrichtung (1) nach einem der vorhergehenden Ansprüche, **dadurch gekennzeichnet, dass** die mindestens eine Wandung (2, 3, 4) und/oder das mindestens eine Strömungsführungselement (6, 7, 8) relativ zu dem mindestens einen Profil (9) bewegt werden kann.

6. Einrichtung (1) nach einem der vorhergehenden Ansprüche, **dadurch gekennzeichnet, dass** das mindestens eine Profil (9) relativ zu der mindestens einen Wandung (2, 3, 4) und/oder dem mindestens einen Strömungsführungselement (6, 7, 8) bewegt werden kann.

7. Einrichtung (1) nach einem der vorhergehenden Ansprüche, **dadurch gekennzeichnet, dass** Strömungsleitbleche, Blenden oder Kästen als Strömungsführungselemente (6, 7, 8) in der Kavität angeordnet sind.

8. Einrichtung (1) nach Anspruch 7, **dadurch gekennzeichnet, dass** die Position der Strömungsführungselemente (6, 7, 8) innerhalb der Kavität mittels Stellmitteln (10, 11, 12, 13, 23, 24) eingestellt werden kann.

9. Einrichtung (1) nach einem der vorhergehenden Ansprüche, **dadurch gekennzeichnet, dass** zwei oder mehr Wandungen (2, 3, 4) und/oder Strömungsführungselemente (6, 7, 8) vorgesehen sind, die relativ zu dem mindestens einen Profil (9) bewegt werden können.

10. Einrichtung (1) nach einem der vorhergehenden Ansprüche, **dadurch gekennzeichnet, dass** die Kavität einen rechteckigen Querschnitt hat oder rohrförmig ist.

11. Einrichtung (1) nach Anspruch 10, **dadurch gekennzeichnet, dass** die rohrförmige Wandung in ihrem Durchmesser veränderlich ist, wobei sie insbesondere aus überlappenden Teilkreiselementen oder einem oder mehreren elastischen Materialien gebildet ist und der Innenquerschnitt der Wandung einstellbar ist.

12. Einrichtung (1) nach einem der vorhergehenden Ansprüche, **dadurch gekennzeichnet, dass** der Abstand des mindestens einen Profils (9) zu der mindestens einen Wandung (2, 3, 4) und/oder dem mindestens einen Strömungsführungselement (6, 7, 8) während des Vulkanisierens einstellbar ist.

13. Einrichtung (1) nach einem der vorhergehenden Ansprüche, **dadurch gekennzeichnet, dass** die Einrichtung einen Sensor zur Erkennung von Profilquerschnitten aufweist und die Stellmittel (10, 11, 12, 13, 23, 24) automatisiert in Abhängigkeit des durch den Sensor erkannten Profils eingestellt werden können.

14. Einrichtung (1) nach einem der vorhergehenden Ansprüche, **dadurch gekennzeichnet, dass** die Größe des Querschnitts des mindestens einen Profileinlasses und/oder des mindestens einen Profilauslasses veränderlich ist.

15. Einrichtung (1) nach einem der vorhergehenden Ansprüche, **dadurch gekennzeichnet, dass** der mindestens eine Heißgaseinlass und der mindestens eine Heißgasauslass derart angeordnet sind, dass das Heißgas in Richtung oder entgegen der Transportrichtung (TR) des mindestens einen Profils (9) strömt, oder dass das Heißgas in einer Richtung orthogonal zur Transportrichtung (TR) des mindestens einen Profils (9) strömt.

## Claims

1. Device (1) for vulcanizing profiles (9) guided through the device, in particular continuous profiles (9) such as, for example, extruded profiles made of rubber, or a sequence of profile pieces, having at least one cavity formed by at least one wall (2, 3, 4), the at least one wall (2, 3, 4) having at least one profile inlet and at least one profile outlet and at least one hot gas inlet and at least one hot gas outlet so that hot gas can flow through the cavity, the hot gas flow being guided by the at least one wall (2, 3, 4) and/or by at least one flow guide element (6, 7, 8) inside the cavity along at least one section of at least one profile (9), **characterized by** adjusting means (10, 11, 12, 13, 23, 24) for adjusting the distance of the at least one wall (2, 3, 4) and/or of the at least one flow guide element (6, 7, 8) from the at least one profile (9).

2. Device (1) according to claim 1, **characterized in that** manually operable means, in particular threaded rods, slides, levers or pushers, are provided as adjusting means (10, 11, 12, 13, 23, 24) for adjusting the distance of the at least one wall (2, 3, 4) and/or the at least one flow guide element (6, 7, 8) from the at least one profile (9).

3. Device (1) according to claim 1 or 2, **characterized in that** at least one adjusting means (10, 11, 12, 13, 23, 24) is driven by a motor or is formed by a motor.

4. Device (1) according to one of the preceding claims, **characterized by** guide means for guiding a movement of the at least one wall (2, 3, 4) or the at least one flow guide element (6, 7, 8), in particular rails, hinges, lifting rods or joints.

5. Device (1) according to one of the preceding claims, **characterized in that** the at least one wall (2, 3, 4) and/or the at least one flow guide element (6, 7, 8) can be moved relative to the at least one profile (9).

6. Device (1) according to one of the preceding claims, **characterized in that** the at least one profile (9) can be moved relative to the at least one wall (2, 3, 4) and/or the at least one flow guide element (6, 7, 8).

7. Device (1) according to one of the preceding claims, **characterized in that** flow guide plates, orifices or boxes are arranged as flow guide elements (6, 7, 8) in the cavity.

8. Device (1) according to claim 7, **characterized in that** the position of the flow guide elements (6, 7, 8) within the cavity can be adjusted by means of adjusting means (10, 11, 12, 13, 23, 24).

9. Device (1) according to any one of the preceding claims, **characterized in that** two or more walls (2, 3, 4) and/or flow guide elements (6, 7, 8) are provided which can be moved relative to the at least one profile (9).

10. Device (1) according to any of the preceding claims, **characterized in that** the cavity has a rectangular cross-section or is tubular.

11. Device (1) according to claim 10, **characterized in that** the tubular wall is variable in diameter, being formed in particular from overlapping pitch circle elements or one or more elastic materials, and the internal cross-section of the wall is adjustable.

12. Device (1) according to one of the preceding claims, **characterized in that** the distance of the at least one profile (9) from the at least one wall (2, 3, 4) and/or the at least one flow guide element (6, 7, 8) is adjustable during vulcanization.

13. Device (1) according to one of the preceding claims, **characterized in that** the device has a sensor for detecting profile cross sections and the adjusting means (10, 11, 12, 13, 23, 24) can be adjusted automatically as a function of the profile detected by the sensor.

14. Device (1) according to one of the preceding claims, **characterized in that** the size of the cross-section of the at least one profile inlet and/or the at least one profile outlet is variable.

15. Device (1) according to one of the preceding claims, **characterized in that** the at least one hot gas inlet and the at least one hot gas outlet are arranged in such a way that the hot gas flows in the direction of or against the transport direction (TR) of the at least one profile (9), or that the hot gas flows in a direction orthogonal to the transport direction (TR) of the at least one profile (9).

## Revendications

1. Dispositif (1) destiné à vulcaniser des profilés (9) conduits à travers le dispositif, en particulier des profilés (9) en continu, comme par exemple des profilés extrudés en caoutchouc ou une série de pièces profilées, avec au moins une cavité formée par au moins une paroi (2, 3, 4), dans lequel la au moins une paroi (2, 3, 4) présente au moins une admission de profilé et au moins une évacuation de profilé, ainsi qu'au moins une admission de gaz chaud et au moins une évacuation de gaz chaud de sorte que la cavité puisse être traversée par du gaz chaud, dans lequel l'écoulement de gaz est conduit par la au moins une paroi (2, 3, 4) et/ou par au moins un élément de guidage d'écoulement (6, 7, 8) à l'intérieur de la cavité le long d'au moins une section d'au moins un profilé (9), **caractérisé par** un moyen de réglage (10, 11, 12, 13, 23, 24) pour régler la distance de la au moins une paroi (2, 3, 4) et/ou du au moins un élément de guidage d'écoulement (6, 7, 8) par rapport au au moins un profilé (9).

2. Dispositif (1) selon la revendication 1, **caractérisé en ce que** des moyens pouvant être actionnés manuellement, en particulier des tiges filetées, des glissières, des leviers ou des poussoirs, sont prévus en tant que moyens de réglage (10, 11, 12, 13, 23, 24) pour régler la distance de la au moins une paroi (2, 3, 4) et/ou du au moins un élément de guidage d'écoulement (6, 7, 8) par rapport au au moins un profilé (9).

3. Dispositif (1) selon la revendication 1 ou 2, **caractérisé en ce qu'**au moins un moyen de réglage (10, 11, 12, 13, 23, 24) est entraîné par un moteur ou formé par un moteur.

4. Dispositif (1) selon l'une des revendications précédentes, **caractérisé par** des moyens de guidage pour guider un mouvement de la au moins une paroi (2, 3, 4) ou du au moins un élément de guidage d'écoulement (6, 7, 8), en particulier des rails, des charnières, des tiges de levage ou des articulations.

5. Dispositif (1) selon l'une des revendications précédentes, **caractérisé en ce que** la au moins une paroi (2, 3, 4) et/ou le moins un élément de guidage d'écoulement (6, 7, 8) peut être déplacé(e) par rapport au au moins un profilé (9).

6. Dispositif (1) selon l'une des revendications précédentes, **caractérisé en ce que** le au moins un profilé (9) peut être déplacé par rapport à la au moins une paroi (2, 3, 4) et/ou au au moins un élément de guidage d'écoulement (6, 7, 8).

7. Dispositif (1) selon l'une des revendications précédentes, **caractérisé en ce que** des déflecteurs d'écoulement, des chicanes ou des caissons sont agencés dans la cavité en tant qu'éléments de guidage d'écoulement (6, 7, 8).

8. Dispositif (1) selon la revendication 7, **caractérisé en ce que** la position des éléments de guidage d'écoulement (6, 7, 8) peut être réglée à l'intérieur de la cavité au moyen de moyens de réglage (10, 11, 12, 13, 23, 24).

9. Dispositif (1) selon l'une des revendications précédentes, **caractérisé en ce que** sont prévus deux ou plusieurs parois (2, 3, 4) et/ou éléments de guidage d'écoulement (6, 7, 8), qui peuvent être déplacés par rapport au au moins un profilé (9).

10. Dispositif (1) selon l'une des revendications précédentes, **caractérisé en ce que** la cavité présente une section transversale rectangulaire ou une forme tubulaire.

11. Dispositif (1) selon la revendication 10, **caractérisé en ce que** la paroi de forme tubulaire peut être modifiée dans son diamètre, dans lequel elle est en particulier formée d'éléments de cercle primitif se chevauchant ou d'un ou plusieurs matériaux élastiques et la section transversale intérieure de la paroi peut être réglée.

12. Dispositif (1) selon l'une des revendications précédentes, **caractérisé en ce que** la distance du au moins un profilé (9) par rapport à la au moins une paroi (2, 3, 4) et/ou au au moins un élément de guidage d'écoulement (6, 7, 8) peut être réglée pendant la vulcanisation.

13. Dispositif (1) selon l'une des revendications précédentes, **caractérisé en ce que** le dispositif présente un capteur pour détecter des sections transversales de profilé et les moyens de réglage (10, 11, 12, 13, 23, 24) peuvent être réglés automatiquement en fonction du profilé détecté par le capteur.

14. Dispositif (1) selon l'une des revendications précédentes, **caractérisé en ce que** la dimension de la section transversale de la au moins une admission de profilé et/ou de la au moins une évacuation de profilé peut être modifiée.

15. Dispositif (1) selon l'une des revendications précédentes, **caractérisé en ce que** la au moins une admission de gaz chaud et la au moins une évacuation de gaz chaud sont agencées de sorte que le gaz chaud s'écoule dans la direction ou à l'encontre de la direction de transport (TR) du au moins un profilé (9), ou **en ce que** le gaz chaud s'écoule dans une direction perpendiculaire à la direction de transport (TR) du au moins un profilé (9).
